# EUROPEAN PATENT SPECIFICATION

(11) **EP 2 847 284 B1**
(45) Date of publication and mention of the grant of the patent: **01.05.2019**
(21) Application number: 13788498.7
(22) Date of filing: 06.05.2013
(51) Int. Cl.: C09D 5/02, C09D 17/00, C08K 3/22, C08J 3/20

(54) **METHOD FOR IMPROVING THE EFFECTIVENESS OF TITANIUM DIOXIDE CONTAINING COATINGS**
VERFAHREN ZUR ERHÖHUNG DER WIRKSAMKEIT VON TITANDIOXIDHALTIGEN BESCHICHTUNGEN
PROCÉDÉ D'AMÉLIORATION DE L'EFFICACITÉ DE REVÊTEMENTS CONTENANT DU DIOXYDE DE TITANE

(30) Priority: 06.05.2012 US 201261643286 P
(43) Date of publication of application: 18.03.2015
(73) Proprietor: Ethox Chemicals, LLC, Greenville, SC 29605 (US)
(72) Inventor: PALMER, Charles, Francis, Greer, SC 29650 (US); VANDEZANDE, Gerald, Raleigh, NC 27606 (US)
(74) Representative: Schüssler, Andrea
(86) International application number: PCT/US2013/039784
(87) International publication number: WO 2013/169676

(56) References cited:
- EP-B1- 0 615 534
- WO-A1-93/11181
- WO-A1-2013/059765
- US-A1- 2004 054 063
- US-A1- 2004 250 735
- US-B2- 6 638 998
- US-B2- 7 960 026

## Description

### FIELD OF THE INVENTION

This invention relates to coatings and in particular to water-borne latex compositions especially paint compositions having improved hiding. This invention also features a process for preparing aqueous compositions including polymeric latex and titanium dioxide pigment, and more particularly to aqueous compositions prepared for use as coatings compositions. The instant invention also relates to polymer systems and, in particular, to latex paints, binders for use in latex paints, processes for the synthesis of binders, and polymeric components used in the binders.

The invention is further directed generally to a process for preparing aqueous compositions including titanium dioxide pigment, and more particularly to the dispersion and distribution of titanium dioxide particles in products formed by the loss of water from such aqueous compositions, including aqueous coating compositions.

This invention also features a coating containing opacifying pigment particles and a polymer matrix. More specifically, the invention relates to such a coating wherein the opacifying pigment particles have improved hiding power. The invention further relates to a coating wherein the opacifying pigment particles are composite particles, which are inorganic-organic particles containing an opacifying pigment particle with at least one polymer particle attached thereto. This invention still further relates to methods of preparing composite particles, and to a method of preparing coating compositions containing composite particles.

The present invention further relates to the use of reactive surfactants for improving the compatibility of inorganic pigments such as titanium dioxide in aqueous coating compositions such as paint and paper coating compositions. In particular, the present invention is related to the use of certain phosphate containing ethylenically unsaturated reactive surfactants for improving the compatibility of inorganic pigments with the latex binders in aqueous paint and paper coating compositions when the latex is prepared in the presence of said reactive surfactant..

### BACKGROUND OF THE INVENTION

Aqueous dispersions of polymeric latex are used to prepare a large variety of commercially important products, including coatings, paints, mastics, primers, caulks, binders for non-woven materials, and adhesives. Often, the polymeric latex is included to form a continuous phase as the water is lost in order to bind the product together, and to contribute important physical properties.

Titanium dioxide has been for many years the pigment of choice for conferring opacity to plastic sheets and films, and particularly to coatings formed from coating compositions and paints. In paints titanium dioxide is typically the most expensive component of the formulation. It has been an ongoing objective of the coatings industry to achieve the desired degree of opacity in a coating while at the same time using as little titanium dioxide pigment as possible. One way in which this is done is by employing titanium dioxide which has an optimal average particle size and particle size distribution for scattering light. Another way of making efficient use of the titanium dioxide employed is by dispersing this pigment as well as possible.

Aggregated or agglomerated titanium dioxide pigment particles make less than their full potential contribution to the performance of the coatings, such as, for example, with regard to coating opacity and colorant potential.

The opacifying capability or hiding power of a paint or coating is a function of the spacing of the titanium pigment particles in the dried coating. The light scattering characteristics of titanium dioxide particles are well known. The average size and size distribution of titanium dioxide particles used for opacifying purposes has been highly optimized by the titanium dioxide manufacturers for maximum scattering. Maximum light scattering occurs when the titanium dioxide pigment particles have a diameter of from about 200 to about 250 nanometers and are spaced far apart from each other, on the order of a few particle diameters, so that there is minimal interference between the light scattering of neighboring particles.

Opacifying capacity is a function of the spacing between the particles of opacifying pigment in the dried applied coating. Opacifying capacity of a coating is maximized when the light scattering capability of the opacifying pigment is maximized. Maximum light scattering efficiency occurs when the opacifying pigment particles have a certain diameter and spacing, so that the light scattering capability of each particle does not interfere with the light scattering capability of its neighboring particles. This condition may occur in coatings containing sufficiently low levels of opacifying pigment such that the individual opacifying pigment particles are isolated from each other. Coatings containing such low levels of opacifying pigment, however, do not provide sufficient whiteness and hiding at typical dried coating thicknesses. Achieving the desired levels of hiding and whiteness typically requires higher levels of opacifying pigment. At these higher levels, a statistical distribution of opacifying pigment particles occurs, which results in at least some of the opacifying pigment particles being in such close proximity to one another that there is a loss of light scattering efficiency due to crowding of the opacifying pigment particles.

Increased hiding efficiency is obtained by reducing the crowding of the opacifying pigment particles and minimizing the formation of clusters of opacifying pigment particles. One method uses polymer particles containing select chemical groups which promote adsorption to the opacifying pigment particle.

In practice, however, for example in the formulation of paints, it is widely recognized that when enough titanium dioxide particles have been dispersed into the polymeric coating vehicle to yield films of acceptable opacity, the level of opacity which is achieved is significantly less than would be theoretically predicted from the light scattering potential of a single titanium dioxide particle multiplied by the total number of particles in the path of light passing through the film.

It is desirable that opacifying coatings and paints have a high opacifying capacity so as to enable the coating or paint to completely conceal the undersurface, even if of a sharply contrasting color, while utilizing a minimal application of the coating or paint. It is highly desirable that complete covering of the undersurface is attained with a single application of the coating or paint, having the minimum possible thickness.

Opacifying coating and paint manufacturers have long sought to formulate opacifying coatings and paints having the desired opacity by maximizing the level of hiding for a defined level of opacifying pigment, in an attempt to approach the theoretical maximum hiding capability for a specific opacifying pigment, while minimizing the amount of opacifying pigment actually utilized.

A number of factors have been identified which partially account for the diminution of opacity from the theoretical predictions. If two or more titanium dioxide particles are in actual contact with each other, or even if they are closer together than the optimum spacing distance, the particles will behave like a single aggregated larger particle and result in reduced light scattering. This occurs if the titanium dioxide particles are not adequately deaggregated during the dispersion process. However, even if the titanium dioxide particles are fully deaggregated in the dispersion process, a random distribution of particles will not provide the maximum scattering achievable in theory if the particles were optimally distributed.

In a related phenomenon, referred to as "crowding," titanium dioxide pigment particles are forced to be nearer to each other than the desired optimum merely by the lack of available space. This lack of available space may be caused by the space taken up by the other coating fillers and extenders which are of a comparable size to, or which are larger than, the pigment particles. In the case of polymeric binders, which are particulate in nature prior to film formation, such as, for example, latex or emulsion polymers, and in the case of nonaqueous dispersion polymers, the binder polymer particles themselves can crowd pigment particles, especially if they are of comparable or larger in size than the titanium dioxide particles.

The traditional guiding rule or goal in the formulation of practical, dispersed titanium dioxide-containing coatings, such as, for example, pigmented latex paints, is to make the titanium dioxide dispersion and the polymeric latex binder dispersions as colloidally stable and compatible with each other as possible, in the sense that they can be mixed without formation of coagulum or like aggregate or excessive increase in viscosity. It has heretofore been found that titanium dioxide particles cannot be effectively dispersed into aqueous latex compositions, by simply blending or directly mixing them into the aqueous polymeric latex composition. When such direct blending of titanium dioxide particles has been attempted, agglomeration of the titanium dioxide particles has resulted in the formation of grit or coagulum in the coating composition. Coatings containing grit or coagulum do not possess the desired degree of hiding or opacity. These coatings may also suffer the loss of other properties such as gloss, mechanical strength and impermeability. Even in the case of nonaqueous (solvent-borne) or 100% solids polymer compositions, high energy grinding or milling input has been found to be necessary to deagglomerate and wet out the titanium dioxide particles. Even with the use of such operations, inferior dispersions containing aggregates of titanium dioxide particles results unless significant quantities of dispersing, wetting or "coupling" agents are employed. However, even when such agents are used, the distribution of the titanium dioxide particles in the polymer system at best approaches that of a random distribution. As a result there exist a substantial number of titanium dioxide particles in close proximity to each other, and possibly in direct physical contact with each other.

In the case of latex paints and coatings, it is conventional practice to first form a stable aqueous dispersion of titanium dioxide pigment with other fillers or extenders. This dispersion, also known as a "mill base" or "grind," may contain water-miscible solvents, such as for example glycols and glycol ethers, and relatively low molecular weight water soluble polyelectrolytes as titanium dioxide pigment grinding aids or dispersants. Generally, these pigment dispersants are anionic polyelectrolytes. Many different types of such dispersants are known.

While these polymeric dispersants and procedures enable the formulation of practical aqueous formulations, they have certain undesirable characteristics. Because of their ionic nature, polyelectrolyte dispersants tend to impart water sensitivity to films, which can result in reduced resistance of the films to scrubbing, and increased swelling with a tendency towards delamination and blistering. Moreover, such polyelectrolyte stabilized dispersions of titanium dioxide particles are prone to flocculation and reaggregation by other ionic species in the aqueous formulation, such as, for example, from initiator residues and from soluble inorganic pigments, especially those which contribute multivalent ions such as zinc oxide and calcium carbonate. Furthermore, since films dry by water evaporation, the concentration of such ionic species in the coating or film increases upon drying, and an otherwise suitable dispersion may become aggregated during the drying process itself.

Even in the unlikely case that a polyelectrolyte dispersant were to confer effective dispersion of titanium dioxide pigment particles to provide a dispersion of singlet particles, the range of distance of the repulsive forces between particles is very small, typically on the order of less than about 100 Angstroms (10 nanometers), in relation to titanium particle size (on the order of 250 nanometers). Consequently, the repulsive forces between particles in such dispersions would be incapable of maintaining any significant degree of spacing between the titanium dioxide particles to improve the scattering or hiding power of the dispersed titanium dioxide pigment, or to have a significant impact on the mechanical properties of the dried film.

A number of techniques have been proposed to disperse inorganic particles such as titanium dioxide particles in aqueous polymer containing coating compositions. For example, there exist methods for encapsulating solid particles by admixing the particles in an aqueous reaction medium with a water-insoluble polymerizable monomer in the presence of nonionic surface active stabilizing agent (such as a polyethoxylated alkylphenol containing at least about 8 carbon atoms in the alkyl group and preferably at least 40-50 ethylene oxide groups per molecule) to form a water-insoluble polymer free of ionic charge. A redox polymerization is employed which is free of ionic groups and does not release ionic groups in the reaction medium.

Naturally agglomerated particulate materials are taught as being effectively dispersed in situ during the polymerization, eliminating the necessity for preliminary grinding and/or dispersion treatments. The resulting latex paints prepared using pigment dispersed as above exhibit improved gloss, opacity, and scrub resistance. The process for achieving pigment encapsulation requires the handling of reactive monomers and other ancillary chemicals and the conducting of chemical reactions in the presence of pigment as an integral part of the process.

The attractive and repulsive forces which control the ability of particles of one type and size to adhere onto the surface of other particles have been the subject of extensive theoretical work and investigation with model systems, as evidenced by numerous publications. These publications typically refer to the phenomenon of particle-particle adhesion as "heterocoagulation", and discuss maximizing the freedom of dissimilar particles from undesirable heterocoagulation in very dilute systems. The theory of so called "heterocoagulation" processes has been described by an extension of the well-known colloidal stability theory of Derjaguin, Landau, Verwey and Overbeek. An extension of the Derjaguin et al. theory is given by the Hogg, Healy and Furstenau equation which extends the theory to include the interaction between spherical colloidal particles of different radii, unequal surface potentials and differing London-van der Waals (i.e. Hamaker) constants, and is described in R. Buscall, et al., Polymer Colloids (Elsevier Applied Science Publications 1985) pages 89-90 and 165-167.

The Derjaguin et al. theory mathematically expresses a balance between attractive forces attributed to van der Waals forces and repulsive forces attributed to like electrical charges on the surfaces of interacting particles. Other types of interaction forces, for example steric repulsion and attraction due to dissolved polymer, can be incorporated into the basic theory at least semi-quantitatively. Investigators have shown the applicability of the theory in very dilute systems. Their conclusions are typically expressed in terms of particle collisions and minimum repulsive energy barriers between particles sufficient to overcome the attractive forces. Below this energy barrier there are too many collisions of particles with energies exceeding this minimum repulsive energy barrier to prevent coagulation. The relationship between this energy barrier and coagulation is taught as depending on several particle and medium variables which include medium dielectric constant, medium ionic strength, particle size, particle surface charge which may be expressed in terms of zeta potential, and the material attraction or Hamaker constant for colloidal materials immersed in the particular medium. No single parameter is, therefore, by itself a predictor of coagulation or stability.

If colloidal dispersions of particles differing in sign of charge are mixed, the usual result is a gross flocculation or coagulation. This result may be a desirable consequence in some circumstances, such as, for example, in instances where it is desired to purify water containing suspended matter or to isolate a bulk solid material from its colloidal suspension. If, however, the dispersions of particles having different sign of charge are mixed together under conditions of low particle concentration, and where one of the particle types is smaller than the other and present in greater number, then gross coagulation may be avoided and the smaller particles may form a monolayer on the larger ones.

However, the particle concentrations required to cleanly effect such a process, without forming significant quantities of coagulum or grit, are so low as to render such a process commercially impractical, since large volumes of liquid dispersions would have to be handled.

The Derjaguin et al. theory and extensions thereof have been useful as a guide for interpreting and correlating aspects relating to the stability of small particles and dilute colloidal dispersions. These theories has been useful despite their quantitative limitations, and the fact that all of the necessary parameters for implementation, such as, for example, the material attraction or Hamaker constants, are not always known, or are not known with sufficient accuracy for all the materials of possible interest. The primary deficiency of the Derjaguin et al. theory is that it is limited to the interactions of two isolated particles of the same type with each other in very dilute dispersions.

Despite extensive research relating to the theory of particle interaction and extensive work with model systems at low particle concentrations, as reflected by numerous publications in the field of colloidal stability and heterocoagulation, the utility of the Derjaguin et al. theory and other theories as relating to the preparation of commercial dispersions containing high concentrations of inorganic particles has not been established.

Additionally, it is known that inorganic particles are commonly incorporated into organic coatings as opacifying pigments to provide whiteness and opacity or "hiding" to opacifying coatings, such as paints. These pigments are present in all coatings that are designed to provide an opaque coating onto a substrate surface and are absent from those coatings that are designed to be clear or transparent. Opacifying pigments are present in opacifying coatings, especially paints, both white or colored. The opacifying pigment of most paints is distinguished from the color specific pigments, also known as tinting agents or colorants, which are additionally present in colored paints. It is the color specific pigments that provide the specific color or tint to non-white paints.

It is also desirable that opacifying coatings and paints have a high opacifying capacity to enable the coating or paint to completely conceal the undersurface, even if of a sharply contrasting color, while utilizing a minimal application of the coating or paint. It is highly desirable that complete covering of the undersurface is obtained with a single application of the coating or paint having the minimum possible thickness.

Opacifying coating and paint manufacturers have long sought to formulate opacifying coatings and paints having the desired opacity by maximizing the level of hiding for a defined level of opacifying pigment, in order to minimize the amount of opacifying pigment utilized.

The opacifying capacity or hiding power of an opacifying coating or paint is a measure of the coating's ability to conceal a surface to which the coating is applied. Opacifying capacity is a function of the spacing between the particles of opacifying pigment in the dried applied coating. Opacifying capacity of a coating is maximized when the light scattering capability of the opacifying pigment is maximized. Maximum light scattering efficiency occurs when the opacifying pigment particles have a certain diameter and spacing, so that the light scattering capability of each particle does not interfere with the light scattering capability of its neighboring particles. This condition may occur in coatings containing sufficiently low levels of opacifying pigment such that the individual opacifying pigment particles are isolated from each other.

Coatings containing such low levels of opacifying pigment, however, do not provide sufficient whiteness and hiding at typical dried coating thicknesses. Achieving the desired levels of hiding and whiteness typically requires higher levels of opacifying pigment. At these higher levels, agglomeration of opacifying pigment particles occurs, which results in a statistical distribution of particle sizes of the opacifying pigment particles.

Titanium dioxide (TiO₂) is the most commonly used opacifying pigment in paints. There is often a shortage of TiO₂ and prices for this raw material are escalating. There is significant interest in the marketplace to improve the hiding performance of TiO₂ in paint and other coatings so that less can be used and thus lower the cost of coating formulations containing it.

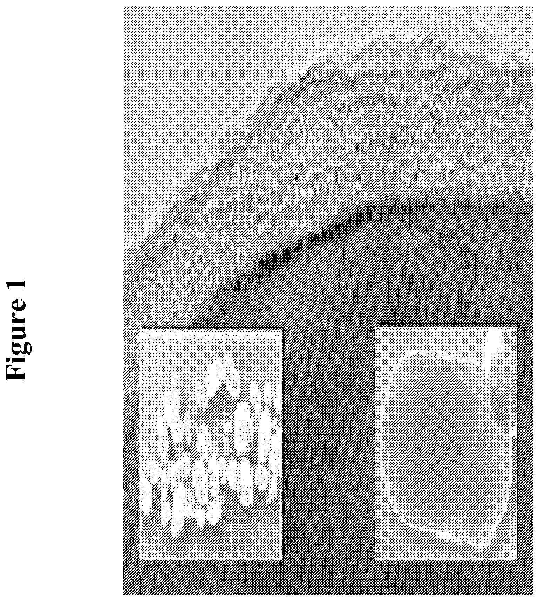

TiO₂ is usually randomly distributed throughout a paint film. This randomness allows for the formation of doublets, triplets etc. of agglomerated pigment particles, reducing their scattering efficiency. Methods to decrease this phenomenon should improve hiding. TiO₂ products are often treated with silica and alumina for various properties (see Figure 1).

US patent 7,960,026 B2 (Angres) discloses a process to make an organic / inorganic composite particle to aid in spacing of the TiO₂. The process requires a TiO₂ particle, a plurality of polymer latex particles in contact with the TiO₂ surface (primary composite particle), and a polymer layer encapsulating the primary composite particle. The primary composite particle is prepared by producing latex particles with phosphate groups on their surfaces and contacting with a TiO₂ particle, preferably one with alumina on its surface. The phosphate groups on the latex particle have an attraction for the alumina sites on the TiO₂ particle surface, resulting in adhesion of the latex particles to the TiO₂ pigment surface. This primary particle is then encapsulated in another latex layer to hold it together. The phosphate groups on the surface of the latex particle are derived from the incorporation of phosphate-containing monomers that copolymerize with the other latex particle monomers.

There is a continuing need to improve the effective utilization of titanium dioxide and other inorganic materials in aqueous coating compositions and thereby to improve the opacity and other performance properties of coating compositions. In addition, there is a need for a method of minimizing the viscosity of titanium dioxide slurries, and to quickly prepare such slurries. Further, there is a need for a process to disperse titanium dioxide particles at high concentrations in coating compositions with a minimal amount of dispersing surfactant and with the substantial absence of grit. In particular, there is a need for a process for preparing stable, high solids, dispersions of microcomposite particles having polymer particles adsorbed onto a titanium dioxide particle.

### BRIEF DESCRIPTION OF THE FIGURES

Figure 1 shows a TiO₂ particle treated with alumina/silica.
Figure 2 illustrates the particle size distribution of the R-741 (TiO₂).
Figure 3 features the particle size distribution of a composite particle (latex184 having a reactive phosphate surfactant having 202nm + TiO₂).
Figure 4 shows the particle size distribution of a composite particle (latex 185 sulfate 196nm + TiO₂).
Figure 5 illustrates the particle size distribution of a composite particle (latex 186 phosphate 130nm + TiO₂).
Figure 6 features the particle size distribution of a composite particle (latex 187 sulfate 128nm + TiO₂).

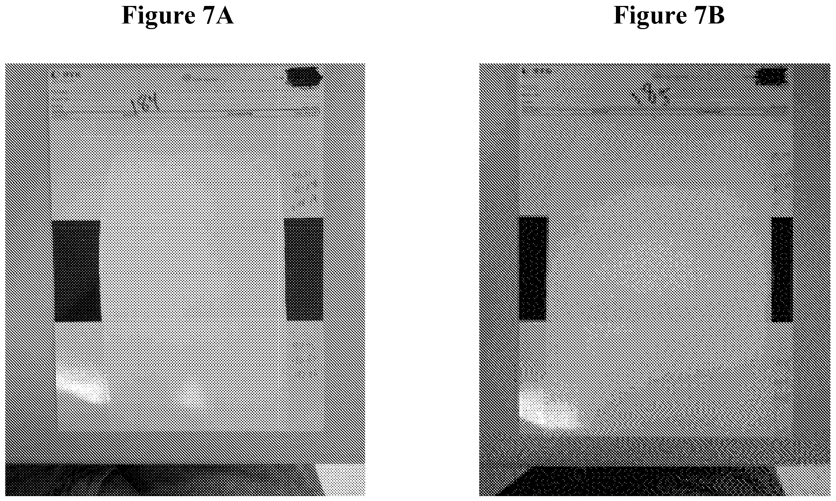

Figure 7A shows a cast film from latex184 Phosphate surfactant + TiO₂.
Figure 7B illustrates a cast film from latex185 Sulfate surfactant + TiO₂.

### SUMMARY OF THE INVENTION

The invention provides a method according to claim 1 for improving the opacity or hiding power of an aqueous latex coating which method comprises adding a TiO₂ dispersion to a latex particle dispersion in which the latex particles are manufactured in the presence of a phosphate-containing ethylenically unsaturated reactive surfactant.

The invention is also directed to a method according to claim 2 for forming a TiO₂-latex composite particle dispersion comprising combining an aqueous TiO₂ dispersion with a latex manufactured with a phosphate-containing ethylenically unsaturated reactive surfactant.

The instant invention further provides an aqueous pigment dispersion according to claim 3 comprising (a) water, (b) at least one latex resin prepared with a phosphate-containing ethylenically unsaturated reactive surfactant; and (c) titanium dioxide particles.

The invention also relates to a process according to claim 4 for preparing an aqueous dispersion of composite particles, the composite particles each comprising a plurality of polymeric latex particles adsorbed onto a titanium dioxide particle, the process comprising: (a) suspending polymeric latex particles in an aqueous medium, the polymeric latex particles having been polymerized in the presence of a phosphate containing ethylenically unsturated reactive surfactant; (b) suspending titanium dioxide particles in the aqueous medium; and (c) mixing the aqueous medium containing the titanium dioxide particles and the polymeric latex particles, the polymeric latex particles adsorbing onto the titanium dioxide particles in a controlled manner to provide the composite particles.

The present invention further provides a process for preparing an aqueous dispersion of composite particles, the composite particles each including a plurality of polymeric latex particles adsorbed onto a titanium dioxide particle. The resulting composite particles can be used in preparing formulated aqueous compositions, such as coating compositions and paints, which in turn give coatings in which the titanium dioxide is more efficaciously dispersed than in prior art coatings. The improved dispersion of the titanium dioxide particles provided by the process of the present invention advantageously reduces the amount of titanium dioxide required to provide desired coating properties, such as opacity or hiding, tint strength, mechanical properties, viscosity, gloss, and scub resistance. The process also provides coating compositions giving coatings with improved opacity for a given pigment level.

It also has been found that the use of certain phosphate containing ethylenically unsaturated reactive surfactants in aqueous coating compositions limits the clustering of TiO₂ particles in these coating compositions, particularly TiO₂ particles added to the compositions in slurry form. In particular, the aqueous coating composition of the invention includes at least one phosphate contining ethylenically unsaturated reactive surfactant having the following structures:

R₁-O-(CH₂CHR₂O)ₓ(CH₂CHR₃O)_{y}-PO₃H₂

or

[R₁-O-(CH₂CHR₂O)ₓ(CH₂CHR₃O)_{y}-]₂-PO₂H

in which x = 1 - 10 and y = 4 - 200; R₁ = phenol, monostyrenated phenol, distyrenated phenol or tristyrenated phenol, C₈-C₁₈alkyl substituted phenol, arylalkyl; R₂ = vinyl, allyl, allyl glycidyl, -CH=CH₂, -CH₂CH=CH₂, -CH₂OCH₂CH=CH₂, -CH₂OC(=O)CR₄=CH₂; R₃ = H, -CH₃, - CH₂CH₃; and R₄ = H, -CH₃. The aqueous composition further includes at least one latex polymer, TiO₂ pigment and water. It should be noted that the reactive surfactant is preferentilly used during the making of the latex via emulsion polymerization.

In one embodiment of the invention, the surfactant includes a phosphate containing ethylenically unsaturated reactive surfactant. The at least one latex polymer is preferably selected from the group consisting of pure acrylics, styrene acrylics, vinyl acrylics and acrylated ethylene vinyl acetate copolymers and more preferably includes a pure acrylic such as a butyl acrylate/methyl methacrylate copolymer. The surfactant discussed above can be incorporated in the latex by using it to produce the latex or it can be added separate from the latex to the aqueous coating composition. The aqueous coating composition can further include at least one anti-freezing agent and one or more additives selected from the group consisting of plasticizers, drying retarders, dispersants, surfactants or wetting agents, rheology modifiers, defoamers, thickeners, coalescing agents, biocides, mildewcides, colorants, waxes, perfumes and co-solvents.

In one preferred embodiment of the invention, the aqueous coating composition is an acrylic latex paint composition, comprising at least one phosphate containing ethylenically unsaturated reactive surfactant as described above; at least one acrylic latex polymer derived from at least one acrylic monomer selected from the group consisting of acrylic acid, acrylic acid esters, methacrylic acids, and methacrylic acid esters; titanium dioxide and water. For example, the at least one acrylic latex polymer can be selected from the group consisting of pure acrylics, styrene acrylics, vinyl acrylics and acrylated ethylene vinyl acetate copolymers and is more preferably a pure acrylic.

The present invention further includes a method of preparing an aqueous coating composition. Specifically, at least one phosphate containing ethylenically unsaturated reactive surfactant as described above, at least one latex polymer, and at least one inorganic pigment are mixed to produce the aqueous coating composition. Preferably, the pigment is in slurry form. The at least one latex polymer is preferably selected from the group consisting of pure acrylics, styrene acrylics, vinyl acrylics and acrylated ethylene vinyl acetate copolymers, and more preferably includes a pure acrylic. At least one anti-freezing agent and at least one additive selected from the group consisting of plasticizers, drying retarders, dispersants, surfactants or wetting agents, rheology modifiers, defoamers, thickeners, coalescing agents, biocides, mildewcides, colorants, waxes, perfumes and co-solvents, can also be mixed in the composition.

The method can further include the step of preparing the polymer latex binder using emulsion polymerization by feeding monomers to a reactor in the presence of at least one initiator and the at least one phosphate containing ethylenically unsaturated reactive surfactant described above and polymerizing the monomers to produce the latex binder. The resulting latex binder can then be mixed with the at least one inorganic pigment to produce the aqueous coating composition. The step of preparing the polymer latex binder can include the steps of preparing an initiator solution comprising the initiator, preparing a monomer pre-emulsion comprising monomers and the surfactant, adding the initiator solution to a reactor and adding the monomer pre-emulsion to the reactor. Preferably, at least a portion of the initiator solution is added to the reactor prior to adding the monomer pre-emulsion. In addition, a seed latex is preferably added to the reactor prior to adding the initiator and adding the monomer pre-emulsion. Once the polymer latex binder is prepared, the latex binder is preferably chemically stripped by adding a peroxide and a reducing agent to the latex binder thereby decreasing the residual monomer content of the latex binder. The monomers fed to a reactor to prepare the polymer latex binder preferably include at least one acrylic monomer selected from the group consisting of acrylic acid, acrylic acid esters, methacrylic acids, and methacrylic acid esters. In addition, the monomers can include one or more monomers selected from the group consisting of styrene, α-methyl styrene, vinyl chloride, acrylonitrile, methacrylonitrile, ureido methacrylate, vinyl acetate, itaconic acid, crotonic acid, maleic acid, fumaric acid, ethylene, and C₄-C₈ conjugated dienes such as 1,3-butadiene, isoprene or chloroprene. Preferably, the monomers include one or more monomers selected from the group consisting of n-butyl acrylate, methyl methacrylate, styrene and 2-ethylhexyl acrylate.

By using the phosphate containing ethylenically unsaturated reactive surfactants discussed above, there is little or no clustering of the TiO₂ particles or other inorganic pigment particles in the aqueous coating compositions of the invention as evidenced, e.g., by cryogenic scanning electron micrograph (SEM) analysis. Therefore, the aqueous coating composition maintains better dispersion of the TiO₂ particles or other inorganic pigment particles than conventional compositions that do not use the reactive surfactants of the invention. Semi gloss paint formulations prepared in accordance with the invention also have excellent high shear viscosities, low shear viscosities, gloss and hiding power and show improvements in these properties over conventional formulations.

These and other features and advantages of the present invention will become more readily apparent to those skilled in the art upon consideration of the following detailed description and accompanying figures, which describe both the preferred and alternative embodiments of the present invention.

### DETAILED DESCRIPTION OF THE INVENTION

In the instant invention, the phosphate groups are derived from the surfactant used to prepare the latex particle, thus obviating the need for separate phosphate monomers and polymerization surfactants. In addition, since the phosphate groups are part of a surface-active molecule, they partition largely onto the surface of the latex particles rather than being incorporated randomly along the latex particle backbone. Since only the phosphate groups on the latex particle surface can associate with the alumina sites on the TiO₂ particle surface and create adhesion, the instant invention allows for stronger adhesion between latex and TiO₂ particles. This obviates the prior art need to encapsulate the composite particle with another latex coating and can allow less phosphated material to be used.

The present invention is a aqueous coating composition that provides excellent dispersion of TiO₂ particles and other inorganic pigment particles. The aqueous coating composition of the invention includes at least one phosphate containing ethylenically unsaturated reactive surfactant, at least one latex polymer, TiO₂ pigment and water.

The reactive surfactants useful for making the latexes of the invention have the following structures:

R₁-O-(CH₂CHR₂O)ₓ(CH₂CHR₃O)_{y}-PO₃H₂

or

[R₁-O-(CH₂CHR₂O)ₓ(CH₂CHR₃O)_{y}-]₂-PO₂H

in which x = 1 - 10 and y = 4 - 200; R₁ = phenol, monostyrenated phenol, distyrenated phenol or tristyrenated phenol, C₈-C₁₈alkyl substituted phenol, arylalkyl; R₂ = vinyl, allyl, allyl glycidyl, -CH=CH₂, -CH₂CH=CH₂, -CH₂OCH₂CH=CH₂, -CH₂OC(=O)CR₄=CH₂; R₃ = H, -CH₃, -H₂CH₃; and R₄ = H, -CH₃.

The TiO₂ pigment can be in both anatase and rutile forms. Generally, the mean particle sizes of the TiO₂ pigments range from about 0.01 to about 50 microns. For example, the TiO₂ particles used in the aqueous coating composition (e.g. provided by the slurry) typically have a mean particle size of from about 0.15 to about 0.40 microns. The inorganic pigment is preferably added to the aqueous coating composition in slurry form. Exemplary TiO₂ slurries for use in the invention include TI-PURE^{RTM} R-746 and R-942, commercially available from DuPont; TIOXIDE^{RTM} RCS-535, RCS-9 and R-HD6X, commercially available from Huntsman Corp.; and KRONOS^{RTM} 4102, commercially available from Kronos, Inc. The inorganic pigment is preferably present in the aqueous coating composition in an amount from about 5 to about 40 percent by weight, more preferably from about 10 to about 30 percent by weight (based on the weight of the inorganic pigment, not the weight of the slurry).

The at least one latex polymer used in the aqueous coating composition is preferably derived from monomers comprising at least one acrylic monomer selected from the group consisting of acrylic acid, acrylic acid esters, methacrylic acids, and methacrylic acid esters. In addition, the latex polymer can optionally include one or more monomers selected from the group consisting of styrene, α-methyl styrene, vinyl chloride, acrylonitrile, methacrylonitrile, ureido methacrylate, vinyl acetate, itaconic acid, crotonic acid, maleic acid, fumaric acid, and ethylene. It is also possible to include C₄-C₈ conjugated dienes such as 1,3-butadiene, isoprene and chloroprene. Preferably, the monomers include one or more monomers selected from the group consisting of n-butyl acrylate, methyl methacrylate, styrene and 2-ethylhexyl acrylate. The latex polymer is typically selected from the group consisting of pure acrylics (comprising acrylic acid, methacrylic acid, an acrylate ester, and/or a methacrylate ester as the main monomers), styrene acrylics (comprising styrene and acrylic acid, methacrylic acid, an acrylate ester, and/or a methacrylate ester as the main monomers), vinyl acrylics (comprising vinyl acetate and acrylic acid, methacrylic acid, an acrylate ester, and/or a methacrylate ester as the main monomers) and acrylated ethylene vinyl acetate copolymers (comprising ethylene, vinyl acetate and acrylic acid, methacrylic acid, an acrylate ester, and/or a methacrylate ester as the main monomers). The monomers can also include other main monomers such as acrylamide and acrylonitrile, and one or more functional monomers such as itaconic acid and ureido methacrylate, as would be readily understood by those skilled in the art. In a particularly preferred embodiment, the latex polymer is a pure acrylic such as a butyl acrylate/methyl methacrylate copolymer derived from monomers including butyl acrylate and methyl methacrylate. The latex polymer dispersion preferably includes from about 30 to about 75% solids and a mean latex particle size of from about 70 to about 650 nm. The latex polymer is preferably present in the aqueous coating composition in an amount from about 5 to about 60 percent by weight, and more preferably from about 8 to about 40 percent by weight (based on the weight of the latex polymer and not the latex dispersion).

The aqueous coating composition can optionally further include at least one anti- freezing agent to improve the freeze-thaw stability of the composition such as propylene glycol, ethylene glycol and diethylene glycol. More preferably, propylene glycol is used. The anti-freezing agent is typically present in the aqueous coating composition in an amount of from 0 to about 15% by weight, more preferably from about 1 to about 10% by weight, based on the total weight of the aqueous coating composition.

The coating composition can optionally contain additives such as one or more film-forming aids. Suitable firm-forming aids include plasticizers and drying retarders such as high boiling point polar solvents. Other conventional coating additives such as, for example, dispersants, additional surfactants or wetting agents, rheology modifiers, defoamers, thickeners, coalescing agents, biocides, mildewcides, colorants such as colored pigments and dyes, waxes, perfumes, co-solvents, and the like, can also be used in accordance with the invention. These additives are typically present in the aqueous coating composition in an amount from 0 to about 15% by weight, more preferably from about 1 to about 10% by weight.

The balance of the aqueous coating composition of the invention is water. Although much of the water is present in the polymer latex dispersion, in the inorganic pigment slurry, and in other components of the aqueous coating composition, water is generally also added separately to the aqueous coating composition. Typically, the aqueous coating composition includes from about 10% to about 85% by weight and more preferably from about 50% to about 80% by weight water. Stated differently, the total solids content of the aqueous coating composition is typically from about 15% to about 90%, more preferably, from about 20% to about 50%.

The coating compositions are typically formulated such that the dried coatings comprise at least 10% by volume of dry polymer solids, and additionally 5 to 90% by volume of non-polymeric solids in the form of inorganic pigments. The dried coatings can also include additives such as plasticizers, dispersants, surfactants or wetting agents, rheology modifiers, defoamers, thickeners, biocides, mildewcides, colorants, waxes, and the like, that do not evaporate upon drying of the coating composition.

The process of this invention further contemplates preparing a dispersion or suspension of selected polymeric latex particles in the aqueous medium where the latex is prepared using a phosphate containing ehtylenically unsaturated reactive surfactant. These polymeric latex particles are selected to adsorb onto the dispersed titanium dioxide particles to provide composite particles, each including both a titanium dioxide particle and adsorbed polymeric latex particles. The titanium dioxide particles remain dispersed in the aqueous medium during and after adsorption of the polymeric latex particles, that is, during their transformation into composite particles. The selected polymeric latex particles can be chosen to strongly adsorb onto the titanium dioxide particles. In some cases, the selected polymeric latex particles are believed to, in effect, irreversibly adsorb onto the titanium dioxide particles. In at least some cases, it is believed that previously adsorbed pigment dispersant is displaced by the adsorbed polymeric latex particles.

The process of the invention provides a solution to the problem of how to practically utilize selected polymeric latex particles which have been prepared in the presence of a phosphate-containing ethylenically unsaturated reactive surfactant to improve the opacity of aqueous-based coatings containing high concentrations of titanium dioxide pigment particles by adsorption of the selected polymeric latex particles to titanium dioxide particles to form composite particles for preparing fully formulated coatings compositions, while increasing the long-term stability of the fully formulated coatings compositions.

The preferred polymeric latex particles are believed to adsorb essentially irreversibly on the surface of the titanium dioxide particles, so that in time the initial pigment dispersant is replaced at least to some extent on the surface by the polymeric latex. The polymeric latex is preferably selected to provide this strong adsorption. This can be accomplished in different ways. In one presently preferred embodiment, a polymeric latex is polymerized from monomer mixture including at least one phosphate-containing ethylenically unsaturated reactive surfactant.

The present process is particularly useful for improving the opacity, gloss, high shear viscosity, color development, permeability, and mechanical properties of coatings and films formed therefrom Alternatively, the invention offers the ability to formulate coatings and films of substantially equal performance properties as conventional systems but with lower titanium dioxide pigment particle concentrations and accordingly at lower cost.

The process of the present invention is particularly useful in the alkaline pH range in which aqueous coatings compositions and paints are frequently formulated, such as from about 7 to 10.

Titanium dioxide particles which have been subjected to prior surface treatment processes can be used in the process of the present invention. For example, titanium dioxide is available with various types of prior surface treatments which provide surface coatings of alumina or silica or mixtures of both.

The process of the present invention is believed to be dependent to some extent on the relative concentrations and particle sizes of the selected polymeric latex particles and the titanium dioxide pigment particles with more polymeric latex particles being required at a higher concentrations of titanium dioxide for optimum performance. Preferably, enough of the selected polymeric latex is employed to obtain optimum performance properties in fully formulated products prepared using the process.

In an embodiment of the process of the present invention, the selected polymeric latex particles themselves do provide a binder for the product formed by the fully formulated aqueous composition. In this case an average polymeric latex particle diameter of from about 80 nm to 600 nm is preferred, and more preferably an average particle diameter of 80-300 nm. In this case the polymeric latex can also be prepared by standard emulsion polymerization techniques. The optimum size of selected polymeric latex particles is believed to depend to some extent on the level of the functionality incorporated in the selected polymeric latex particles, with particle size varying inversely with the level of functionality.

The concentration of the titanium dioxide particles (and any other pigments which may be present in the composition) in a coating formulation is expressed in terms of the pigment volume concentration of the formulation. The pigment volume concentration (hereinafter referred to as the "PVC") of a formulation is defined as the volume amount of inorganic particles, including titanium dioxide and other pigment particles as well as extender particles, present in the formulation, divided by the sum of the volume amount of such inorganic particles plus polymeric latex particle solids in the formulation and expressed herein as a percentage. Preferably, the PVC of compositions prepared according to the present invention is from about 5 to 60 percent, and more preferably from about 10 to 50 percent.

The overall concentration of pigment particles, extender particles and emulsion polymer particles in a formulation is typically expressed in terms of a percent volume solids for the formulation. The percent volume solids is an expression of the extent of the dilution of the solids in a liquid vehicle, such as water.

The polymeric latexes used in the practice of the present invention can have monomer compositions and particle sizes closely related to polymeric latex binders prepared by standard emulsion polymerization techniques known in the art.

Thus, the present invention provides aqueous dispersions, coating compositions, and pigment slurries including selected polymeric latex particles and titanium dioxide pigment particles, selected polymeric latex particles which have been prepared in the presence of a phosphate containing ethylenically unsaturated reactive surfactant.

The polymeric latex used in the present invention can be prepared by any technique known in the art, such as suspension polymerization or emulsion polymerization. Emulsion polymerization techniques for preparing aqueous dispersions of latex polymer particles from ethylenically unsaturated monomers are well known in the polymer arts, and any conventional emulsion technique can be used, such as single and multiple shot batch processes, and continuous processes. If desired, a monomer mixture can be prepared and added gradually to the polymerization vessel. The monomer composition within the polymerization vessel can be varied during the course of the polymerization, such as by altering the composition of the monomer being fed into the vessel. Both single and multiple stage polymerization techniques can be used. The latex polymer particles can be prepared using a seed polymer emulsion to control the number of particles produced by the emulsion polymerization as is known in the art. The particle size of the latex polymer particles can be controlled by adjusting the initial surfactant charge as is known in the art. All of the above processes are conducted in the presence of a phosphate containing ethylenically unsaturated reactive surfactant.

The polymer latex binder can be produced by first preparing an initiator solution comprising the initiator and water. A monomer pre-emulsion is also prepared comprising at least a portion of the monomers to be used to form the latex polymer, one or more reactive surfactants of the invention, water, and additional additives such as NaOH. The one or more surfactants in the monomer pre-emulsion preferably include the surfactant of the invention described above. The initiator solution and monomer pre-emulsion are then continuously added to the reactor over a predetermined period of time (e.g. 2-5 hours) to cause polymerization of the monomers and to thereby produce the latex polymer. Preferably, at least a portion of the initiator solution is added to the reactor prior to adding the monomer pre-emulsion. Prior to the addition of the initiator solution and the monomer pre-emulsion, a seed latex such as a polystyrene seed latex can be added to the reactor. In addition, water, one or more surfactants, and any monomers not provided in the monomer pre-emulsion can be added to the reactor prior to adding the initiator and adding the monomer pre-emulsion. The reactor is operated at an elevated temperature at least until all the monomers are fed to produce the polymer latex binder. Once the polymer latex binder is prepared, it is preferably chemically stripped thereby decreasing its residual monomer content. Preferably, it is chemically stripped by continuously adding a peroxide (e.g. t-butylhydroperoxide) and a reducing agent (e.g. sodium acetone bisulfite) to the latex binder at an elevated temperature and for a predetermined period of time (e.g. 0.5 hours). The pH of the latex binder can then be adjusted and a biocide or other additives added after the chemical stripping step.

As described above, a polymerization initiator can be used in carrying out the polymerization of the polymeric latex particles. Examples of polymerization initiators which can be employed include polymerization initiators which thermally decompose at the polymerization temperature to generate free radicals. Examples include both water-soluble and water-insoluble species. Examples of free radical-generating initiators which can be used include persulfates, such as ammonium or alkali metal (potassium, sodium or lithium) persulfate; azo compounds such as 2,2'-azo-bis(isobutyronitrile), 2,2'-azo-bis(2,4-dimethylvaleronitrile), and 1-t-butyl-azocyano-cyclohexane); hydroperoxides such as t-butyl hydroperoxide and cumene hydroperoxide; peroxides such as benzoyl peroxide, caprylyl peroxide, di-t-butyl peroxide, ethyl 3,3'-di-(t-butylperoxy) butyrate, ethyl 3,3'-di(t-amylperoxy) butyrate, t-amylperoxy-2-ethyl hexanoate, and t-butylperoxy pivilate; peresters such as t-butyl peracetate, t-butyl perphthalate, and t-butyl perbenzoate; as well as percarbonates, such as di(1-cyano-1-methylethyl)peroxy dicarbonate; perphosphates, and the like.

Polymerization initiators can be used alone or as the oxidizing component of a redox system, which also includes a reducing component such as ascorbic acid, malic acid, glycolic acid, oxalic acid, lactic acid, thiogycolic acid, or an alkali metal sulfite, more specifically a hydrosulfite, hyposulfite or metabisulfite, such as sodium hydrosulfite, potassium hyposulfite and potassium metabisulfite, or sodium formaldehyde sulfoxylate. The reducing component is frequently referred to as an accelerator.

The initiator and accelerator, commonly referred to as catalyst, catalyst system or redox system, can be used in proportion from about 0.001% to 5% each, based on the weight of monomers to be copolymerized. Accelerators such as chloride and sulfate salts of cobalt, iron, nickel or copper can be used in small amounts. Examples of redox catalyst systems include tertbutyl hydroperoxide/sodium formaldehyde sulfoxylate/Fe(II), and ammonium persulfate/ sodium bisulfite/sodium hydrosulfite/Fe(II). The polymerization temperature can be from room temperature to about 90° C., and can be optimized for the catalyst system employed, as is conventional.

Chain transfer agents can be used to control polymer molecular weight, if desired. Examples of chain transfer agents include mercaptans, polymercaptans and polyhalogen compounds. Examples of chain transfer agents which may be used include alkyl mercaptans such as ethyl mercaptan, n-propyl mercaptan, n-butyl mercaptan, isobutyl mercaptan, t-butyl mercaptan, n-amyl mercaptan, isoamyl mercaptan, t-amyl mercaptan, n-hexyl mercaptan, cyclohexyl mercaptan, n-octyl mercaptan, n-decyl mercaptan, n-dodecyl mercaptan; alcohols such as isopropanol, isobutanol, lauryl alcohol and t-octyl alcohol; halogenated compounds such as carbon tetrachloride, tetrachloroethylene, and tricholorobromoethane. Generally from 0 to 10% by weight, based on the weight of the monomer mixture, can be used. The polymer molecular weight can be controlled by other techniques known in the art, such as selecting the ratio of initiator to monomer.

Catalyst and/or chain transfer agent can be dissolved or dispersed in separate or the same fluid medium and gradually added to the polymerization vessel. Monomer, either neat or dissolved or dispersed in a fluid medium, can be added simultaneously with the catalyst and/or the chain transfer agent. Amounts of initiator or catalyst can be added to the polymerization mixture to "chase" residual monomer after polymerization has been substantially completed to polymerize the residual monomer as is well known in the polymerization arts.

The polymeric latexes useful in the process of the present invention can be prepared from a wide range of polymerizable monomers, such as, for example, monoethylenically unsaturated monomers, including alpha, beta-monoethylenically unsaturated monomers such as alkyl acrylates and methacrylates. By "acrylic polymeric latex" is meant a polymeric latex polymerized from monomers comprising substantially polymerizable monomers including the acryl group (--COCH=CH₂) or methacryl (--COC(CH₃)=CH₂) group, and specifically greater than about 80 weight percent (meth)acrylic monomers, based on the total monomer weight. Mixtures of polymeric latexes can also be used.

Examples of polymeric latexes which can be employed in the process of the present invention include those polymerized from ethylenically unsaturated monomers, such as α, β - ethylenically unsaturated monomers, including styrene, butadiene, α-methylstyrene, vinyltoluene, vinylnaphthalene, ethylene, vinyl acetate, vinyl versarate, vinyl chloride, vinylidene chloride, acrylonitrile, methacrylonitrile, (meth)acrylamide, various (C1 -C20)alkyl esters of (meth)acrylic acid; for example, methyl (meth)acrylate, ethyl (meth)acrylate, n-butyl (meth)-acrylate, isobutyl (meth)acrylate, 2-ethylhexyl (meth)acrylate, cyclohexyl (meth)acrylate, n-octyl (meth)acrylate, n-decyl (meth)acrylate, n-dodecyl (meth)acrylate, tetradecyl (meth)acrylate, n-amyl (meth)acrylate, neopentyl (meth)acrylate, cyclopentyl (meth)acrylate, lauryl (meth)-acrylate, oleyl (meth)acrylate, palmityl (meth)acrylate, and stearyl (meth)acrylate; other (methacrylates such as isobornyl (meth)acrylate, benzyl (meth)acrylate, phenyl (meth)acrylate, 2-bromoethyl (meth)acrylate, 2-phenylethyl (meth)acrylate, and 1-naphthyl (meth)acrylate; alkoxyalkyl (meth)acrylate such as ethoxyethyl (meth)acrylate; mono-, di-, and trialkyl esters of ethylenically unsaturated di- and tricarboxylic acids and anhydrides, such as ethyl maleate, dimethyl fumarate, trimethyl aconitate, and ethyl methyl itaconate. As used in the present specification and claims, "(meth)acrylate" denotes both "acrylate" and "methacrylate" and "(meth)acrylic" denotes both "methacrylic" and "acrylic." The ethylenically unsaturated monomer can also include at least one multi-ethylenically unsaturated monomer effective to raise the molecular weight and crosslink the polymer. Examples of multiethylenically unsaturated monomers that can be used include allyl (meth)acrylate, tripropylene glycol di(meth)acrylate, diethylene glycol di(meth)acrylate, ethylene glycol di(meth)acrylate, 1,6-hexanediol di(meth)-acrylate, 1,3-butylene glycol di(meth)acrylate, polyalkylene glycol di(meth)acrylate, diallyl phthalate, trimethylolpropane tri(meth)acrylate, divinylbenzene, divinyltoluene, trivinylbenzene, and divinylnaphthalene.

In addition to those monomers which are "functional" in the sense of including one or more polymerizable ethylenically unsaturated groups, monomers which also include one or more additional functional groups can be used in preparing the polymeric latexes used in the process of this invention. An important class of these functional monomers is that made up of those polymerizable ethylenically unsaturated monomers having acidic functional groups. Examples of these include acrylic acid, methacrylic acid, beta-acryloxypropionic acid and higher monoacidic oligomers of acrylic acid, ethacrylic acid, alpha-chloroacrylic acid, α-vinylacrylic acid, crotonic acid, α-phenylacrylic acid, cinnamic acid, chlorocinnamic acid, β-styrylacrylic acid, itaconic acid, and maleic acid.

Examples of synthetic polymeric latexes which can be used include acrylic copolymer latexes, such as butyl acrylate/methyl methacrylate/acid and ethyl acrylate/methyl methacrylate/ acid copolymer latexes; vinyl acetate homopolymer and copolymer latexes, including ethylene/ vinyl acetate copolymer latexes; styrene/butadiene copolymer latexes; and the like.

While the chemical composition of a polymeric latex binder is important for achieving the resultant properties of the coating or film when the polymeric latex also acts as the binder, the glass transition temperature and amount of acid functionality in the polymeric latex can also be important for the purpose of the invention.

The particle size, particle size distribution, and molecular weight of the selected polymeric latex can be selected by the choice of a particular polymerization process, as for example through the use of particular initiator and chain transfer systems, as is well known in the polymerization arts. The average particle size and the molecular weight of the polymeric latex are important with regard to both the opacity improvement, as well as with respect to the properties of the polymeric latex when it is employed as a binder in the fully formulated aqueous composition.

Titanium dioxide pigment in available in various grades from several suppliers, with specific titanium dioxide grades being optimized by the supplier for intended end use application, such as for high gloss paints, for general purpose applications, and the like. Titanium dioxide particles can be prepared by either the chloride process or sulfate process, and the method of preparation may affect the physical and chemical properties of the products, including the surface properties. The titanium dioxide particles can be pretreated to provide inorganic surface coatings, such as coatings of silica, aluminum oxide, zirconium oxide, or mixtures of silica and aluminum oxide, on titanium dioxide particles. Similarly, proprietary organic coatings are sometimes employed by suppliers of titanium dioxide pigments.

In addition, small molecular species, such as silanes or titanates, can be adsorbed on and reacted with surface of the titanium dioxide particles, and the resulting surface sites can be subsequently modified chemically. Examples of such species include N-2-aminoethyl-3 -aminopropyltrimethoxysilane, 3-aminopropyltrimethoxysilane, 3-methacryloxypropyltrimethoxysilane, and vinyltriacetoxysilane. Alternatively, other species can be simply adsorbed to the surface of the titanium dioxide pigment particles. The most important examples of these are low molecular weight polyelectrolytes such as conventional pigment dispersants.

The practice of the process of the present invention depends on the specific grade of titanium dioxide employed. It is not presently understood what determines whether the present process can be employed, although it is believed that the surface characteristics of the titanium dioxide may be important. Nevertheless, whether the present process can be employed to yield improved coatings properties with respect to a specific grade of titanium dioxide can be readily determined empirically.

The adsorption of polymeric latex particles on titanium dioxide pigment particles is presently believed to be a complex function of the type and level of adsorbing moiety on the titanium dioxide pigment particles surface, the surface treatment on the titanium dioxide pigment particle's surface, the pigment and binder surface area, the level and type of dispersants present in the mixture, the type of thickener used, the ionic strength of the mixture, and the presence or absence of other, competing molecules. Together, these factors are believed to determine the adsorption level, thereby affecting viscosity and viscosity stability, hiding, gloss, and block.

The process of the present invention can significantly increase the hiding of titanium dioxide containing emulsion paint formulations (as determined by measuring the scattering coefficient of the paint) of the same PVC compared with the scattering coefficient of a paint formulation prepared by the use of conventional polymeric latices. An alternate way of expressing this improvement is that the process of the invention permits the reduction of the PVC of a 20% PVC titanium dioxide paint formulation by as much as 20 percent or more while achieving the same scattering coefficient or degree of hiding as can be obtained by the use of a conventional polymeric latex.

Furthermore, the improved performance of paint formulations prepared by the present process is achieved even in the presence of substantial amounts of large particle size extenders, such as calcium carbonate and alumino silicate, typically employed in such formulations.

In addition to the titanium dioxide particles, which are typically of relatively small particle size, on the order of 200-250 nm, other pigment particles, such as the large particle size extender pigment particle typically included in many types of coating formulation to reduce raw material costs, can also be employed in addition to the titanium dioxide pigment particles in the process of the present invention. Examples of large particle size extender pigment particles which can be used include calcium carbonate, alumino-silicate, amorphous silica, and the like.

The present invention is further defined in the following Examples. It should be understood that these Examples, while indicating preferred embodiments of the invention, are given by way of illustration only. From the above discussion and these Examples, one skilled in the art can ascertain the essential characteristics of this invention, and without departing from the spirit and scope thereof, can make various changes and modifications of the invention to adapt it to various uses and conditions.

The following Examples are illustrative of the invention. In the Examples, "part" and "%" are all part by weight or % by weight unless specified otherwise.

### EXAMPLES

### Materials:

The surfactants and TiO₂ used in the study are shown below.

### Example 1

Distyrenated phenol (DSP) (694 g, 1 equivalent) was added to a stainless steel autoclave along with allyl glycidyl ether (AGE) (494 g, 2 equivalents) and potassium hydroxide KOH (2.3 g) and the autoclave sealed and heated to 105 C. When all of the AGE was consumed, the reaction mass was cooled, and the product discharged. This is AGE 2 DSP adduct.

1680 g of this AGE 2 DSP adduct (1 equivalent) was added to another autoclave and heated to 105 C. Ethylene oxide (2026 g, 15 equivalents) was then added over the course of several hours. After all of the EO was consumed, the reaction mass was cooled and the catalyst neutralized with the addition of a small amount of acid. This material is Example 1. This material is also referred to as ERS 1617. This material is also known as ERS 1617.

### Example 1A

Distyrenated phenol (DSP) (1388 g, 2 equivalent) was added to a stainless steel autoclave along with allyl glycidyl ether (AGE) (988 g, 4 equivalents) and potassium hydroxide KOH (4.6 g) and the autoclave sealed and heated to 105 C. When all of the AGE was consumed, the reaction mass was cooled, and the product discharged. This is AGE 2 DSP adduct.

3360 g of this AGE 2 DSP adduct (2 equivalents) was added to another autoclave and heated to 105 C. Ethylene oxide (4052 g, 30 equivalents) was then added over the course of several hours. After all of the EO was consumed, the reaction mass was cooled and the catalyst neutralized with the addition of a small amount of acid.

### Example 1B

Distyrenated phenol (DSP) (347 g, 0.5 equivalent) was added to a stainless steel autoclave along with allyl glycidyl ether (AGE) (247 g, 1 equivalents) and potassium hydroxide KOH (1.15 g) and the autoclave sealed and heated to 105 C. When all of the AGE was consumed, the reaction mass was cooled, and the product discharged. This is AGE 2 DSP adduct.

940 g of this AGE 2 DSP adduct (0.5 equivalent) was added to another autoclave and heated to 105 C. Ethylene oxide (1013 g, 7.5 equivalents) was then added over the course of several hours. After all of the EO was consumed, the reaction mass was cooled and the catalyst neutralized with the addition of a small amount of acid.

### Example 1C

Distyrenated phenol (DSP) (2776 g, 4equivalent) was added to a stainless steel autoclave along with allyl glycidyl ether (AGE) (1976 g, 8 equivalents) and potassium hydroxide KOH (9.2 g) and the autoclave sealed and heated to 105 C. When all of the AGE was consumed, the reaction mass was cooled, and the product discharged. This is AGE 2 DSP adduct.

6720 g of this AGE 2 DSP adduct (4 equivalents) was added to another autoclave and heated to 105 C. Ethylene oxide (8104 g, 60 equivalents) was then added over the course of several hours. After all of the EO was consumed, the reaction mass was cooled and the catalyst neutralized with the addition of a small amount of acid.

### Example 2

Example 1 was sulfated with sulfamic acid in a glass reactor equipped with a stirrer, thermometer, and reflux condenser by heating to 120 C until the %sulfate was > 90%. The product, Example 2, was isolated as the ammonium salt. The product is also known as ERS 1618.

### Example 2A

Three moles of Example 1 was phosphated with one mole of phosphorus pentoxide (P₂O₅) in a glass reactor equipped with a stirrer, thermometer, and reflux condenser by heating to 70 C until the reaction was complete. The product phosphoric acid ester, a mixture of mono- and diesters, was neutralized with aqueous ammonium hydroxide. The product was isolated as the ammonium salt in aqueous solution.

### Example 2B

Three moles of Example 1 was phosphated with one mole of phosphorus pentoxide (P₂O₅) in a glass reactor equipped with a stirrer, thermometer, and reflux condenser by heating to 70 C until the reaction was complete. The product phosphoric acid ester, a mixture of mono- and diesters, was neutralized with aqueous ammonium hydroxide. The product was isolated as the ammonium salt in aqueous solution.

### Example 2C

### 1 POE(15) {DSP, 2 AGE} phosphate

Distyrenated phenol (DSP) (694 g, 1 equivalent) was added to a stainless steel autoclave along with allyl glycidyl ether (AGE) (494 g, 2 equivalents) and potassium hydroxide KOH (2.3 g) and the autoclave sealed and heated to 105 C. When all of the AGE was consumed, the reaction mass was cooled, and the product discharged. This is AGE 2 DSP adduct.

1680 g of this AGE 2 DSP adduct (1 equivalent) was added to another autoclave and heated to 105 C. Ethylene oxide (2026 g, 15 equivalents) was then added over the course of several hours. After all of the EO was consumed, the reaction mass was cooled and the catalyst neutralized with the addition of a small amount of acid.

This ethoxylate was phosphated with phosphoric anhydride according to methods known in the art. A mixture of mono- and diphosphate esters was produced. The phosphate ester was neutralized with NaOH solution in water to produce the final product.

### Example 2D

### POE (15) {DSP, 2 AGE} sulfate

The same ethoxylate in Example 1 was converted to the sulfate by reaction with sulfamic acid according to methods known in the art. The sulfate in the ammonium ion form is Example 2D.

R-741 - Dispersed TiO₂ - 64% solids - DuPont. R-741, a predispersed TiO₂ product in water from DuPont was used for simplicity, instead of making a dispersion from dry pigment. This is the same product as R-931, in Table 1 below, but dispersed in water. It has a particle size of 550 nm and has high alumina content.

**Table 1**

| **DuPont™ Ti Pure® TiO₂ for Coatings - Dry Grades** | **Property** | | | | | |
|---|---|---|---|---|---|---|
| | **R-900** | **R-902+** | **R-706** | **R-960** | **R-931** | **TS-6200** |
| TiO₂, wt%, min. | 94 | 93 | 93 | 89 | 80 | 93 |
| Alumina, wt% | 4.3 | 4.3 | 2.5 | 3.3 | 6.4 | 3.6 |
| Silica, wt% | - | 1.4 | 3.0 | 5.5 | 10.2 | 3.3 |
| Specific Gravity | 4.0 | 4.0 | 4.0 | 3.9 | 3.6 | 4.0 |
| Bulking Value, L/kg | 0.250 | 0.250 | 0.250 | 0.255 | 0.275 | 0.250 |
| gal/lb | 0.030 | 0.030 | 0.030 | 0.031 | 0.033 | 0.30 |
| Organic Treatment | No | Yes | Yes | No | No | Yes |
| Color, CIE L | 99.8 | 99.6 | 99.4 | 99.9 | 100.0 | 99.4 |
| Median Particle Size, µm | 0.41 | 0.405 | 0.36 | 0.50 | 0.55 | 0.39 |
| Oil Absorption | 15.2 | 16.2 | 13.9 | 18.7 | 35.9 | 16.0 |
| pH | 8.1 | 7.9 | 8.2 | 7.2 | 8.9 | 8.0 |
| Resistance at 30 C (86 F) k-ohm | 12 | 8.1 | 10 | 6 | 4 | 10 |
| Carbon Balck Undertone | 12.4 | 11.7 | 14.5 | 11.6 | 9.8 | 13.0 |

### Example 3

### Experimental Procedure for Latex Synthesis:

All latexes were produced in a jacketed glass reactor. The temperature was regulated by an external circulating water heater. The reactor was fitted with a thermocouple, reflux condenser and feed lines. The monomer was fed subsurface through a stainless steel tube. The initiator was added above the surface of the latex. Both monomer and initiator were fed via FMI pumps. The detailed procedure is listed in Table 2. Note that the calculated Tg of the latexes was -5 C. The minimum film formation temperature (MFFT) of the latex was measured at < 2° C.

The particle size was adjusted by changing the concentration of the seed latex. The seed latex is a preformed latex of very small particle size. This helps ensure the predictability of the final particle size as the number of particles are set at the beginning of the polymerization:
(1) For latex samples 184 and 185, 45g of the seed latex was used to obtain a particle size of ∼200 nm
(2) For latex samples 186 ad 187, 200g of the seed latex was used to obtain a particle size of ∼130 nm

**Table 2 (Latex Recipe)**

| Material | Weight | Purity | Solids | | |
|---|---|---|---|---|---|
| Initial Charge | | | | | |
| Water | 305.0 | 0.00 | 0.0 | | |
| Sodium Bicarbonate | 6.00 | 1.00 | 6.0 | | |
| Seed Latex | 200.0 | 0.31 | 61.0 | | |
| | | | | | |
| Sub Total | 511.0 | | 67.0 | | |

| Initial Oxidizer | | | | | |
|---|---|---|---|---|---|
| Ammonium Persulfate | 2.30 | 1.00 | 2.3 | | |
| Water | 60.00 | 0.00 | 0.0 | | |
| Sub Total | 62.3 | | 2.3 | | |

| Monomer Feed 1 | | | | | |
|---|---|---|---|---|---|
| Water | 295.00 | 0.00 | 0.0 | | |
| Example 1 or 2 | 10.00 | 1.00 | 10.0 | | |
| Butyl Acrylate | 450.0 | 1.00 | 450.0 | | |
| Methyl Methacrylate | 350.0 | 1.00 | 350.0 | | |
| Methacrylic Acid | 8.3 | 1.00 | 8.30 | | |
| Sub Total | 1113.3 | | 818.3 | | |

| Delayed Oxidizer | | | | | |
|---|---|---|---|---|---|
| Ammonium Persulfate | 2.30 | 1.00 | 2.3 | | |
| Water | 56.00 | 0.00 | 0.0 | | |
| Sub Total | 58.30 | | 2.3 | | |

| Post Oxidizer | | | | | |
|---|---|---|---|---|---|
| t-butylhydroperoxide | 0.90 | 0.70 | 0.6 | | |
| Water | 23.00 | 0.00 | 0.0 | | |
| Sub Total | 23.90 | | 0.6 | | |

| Post Reducer | | | | | |
|---|---|---|---|---|---|
| Sodium metabisulfite | 0.90 | 1.00 | 0.9 | | |
| Water | 23.00 | 0.00 | 0.0 | | |
| Sub Total | 23.90 | | 0.9 | | |

| Post Addition | | | | | |
|---|---|---|---|---|---|
| NH4OH (28% NH3) | 0.0 | 0.00 | pH = 8 | Calculated Tg | 5 C |
| Water | 0.0 | 0.00 | 0.0 | Seed concentration on monomer | 7.45% |
| Sub Total | 0.0 | | 0.0 | Expected properties | |
| TOTAL SUM | 1793 | | 891 | Total Solids (%) | 49.7% |
| Feed rates (mls/min) | Start | Stop | Rate | Seed Surf on solids | 0.34% |
| Monomer Feed 1 (ratel) | 0 | 30 | 2.00 | Added Surf on solids | 1.12% |
| Monomer Feed 1 (ratel) | 30 | 210 | 5.85 | Oxidizer on solids | 0.52% |
| Delayed Oxidizer | 0 | 210 | 0.28 | Post oxidizer on solids | 0.07% |
| Post Oxidizer | 240 | 300 | 0.40 | Post reducer on solids | 0.10% |
| Post Reducer | 240 | 300 | 0.40 | MAA on solids | 0.93% |

| | | | | | |
|---|---|---|---|---|---|
| Procedure for making the latexes: -Start heaters -Make up initial charge -Make up monomer feed -Make up initiator solution -Allow charge to heat to 75C -Add initial oxidizer. -See rates for monomer feeds below -Begin delayed oxidizer feed within 10 minutes of start of monomer feeds -At the end of monomer feeds, wait 30 minutes -Begin post oxidizer and reducer feeds. -Cool down to at least 30C -Adjust pH | | | | | |

### Example 4

### Particle size of latex:

The particle sizes of the latexes are shown in Table 3 below. The particle size distributions were monomodal.

**Table 3 (Particle size of Latexes)**

| | | **Particle size (nm)** | | | | | |
|---|---|---|---|---|---|---|---|
| **Recipe** | **Surfactant** | ***10%*** | ***50%*** | ***90%*** | ***Mv*** | ***Mn*** | ***Ma*** |
| 184 | Example 1 | 170 | 202 | 237 | 202 | 191 | 199 |
| 185 | Example 2 | 162 | 194 | 283 | 196 | 184 | 192 |
| 186 | Example 1 | 88 | 116 | 161 | 128 | 103 | 115 |
| 187 | Example 2 | 97 | 123 | 159 | 130 | 113 | 122 |

### Example 5

### Stability of the latexes:

The pre-emulsions were easily formed and were stable in all cases. In-process foaming was low. All monomers were easily reduced to less than 150 ppm. The stability of the latexes as measured by filterable solids is presented in Table 4.

**Table 4 (Stability of latex particles)**

| ***Recipe*** | ***Surfactant*** | ***Filterable solids* - *40 mesh (ppm)*** | ***Filterable solids* - *150 mesh (ppm)*** | ***Initial pH*** | ***Final pH*** |
|---|---|---|---|---|---|
| 184 | ERS 1685 | 3570 | 270 | | 8.2 |
| 185 | ERS 1618 | 35 | 200 | 7.3 | 8.0 |
| 186 | ERS 1685 | 3350 | 3250 | 7.6 | 8.0 |
| 187 | ERS 1618 | 30 | 20 | 6.3 | 8.5 |

### Example 6

### Experimental Procedure for TiO₂ composites:

To a 400ml beaker was added 110g of latex. Under agitation, 40g of R-741 TiO₂ was added to the latex in the beaker in a dropwise fashion. This mixture was stirred for a further 1 hour. It was then allowed to equilibrate overnight. Latex / TiO₂ blend ratios were obtained from a typical satin paint formulation. The particle size of the blends were then measured.

If there were no interaction between the latex particles and the TiO₂ particles, the particle size distribution data would show data indicative of a simple blend. A distribution for the latex particles would be visible around the 100 - 200 nm size range as well as a distribution around 800 nm for the TiO₂ particles together on the same scan (a bimodal distribution). There would be no particles larger than the TiO₂ particles since they are much larger than the latex particles. The presence of particles larger than the TiO₂ particles indicates the formation of composite particles formed from both particle types joined by an attractive force.

### Example 7

### Particle size of TiO₂ and composites:

The particle size of the latex composites are listed below in Table 5.

All of the composites have a larger Mv (volume average) than the R-741 indicating some degree of agglomeration. The exception is the 185 composite.

The Mn (number average) for the composites is only larger for the 184 composite. This indicates that some significant portion of free latex still exists and is not bound to the surface. It is possible that there is insufficient TiO₂ surface to accommodate all the particles in the small particle size latexes (186 and 187).

**Table 5 (Particle size of latex TiO₂ composites in nm)**

| ***Recipe*** | ***Surfactant*** | ***10%*** | ***50%*** | ***90%*** | ***Mv*** | ***Mn*** | ***Ma*** |
|---|---|---|---|---|---|---|---|
| R-741 | --- | 328 | 681 | 1483 | 807 | 364 | 588 |
| 184 + TiO₂ | ERS 1685 | 607 | 116 1 | 2375 | 1348 | 395 | 998 |
| 185 + TiO₂ | ERS 1618 | 164 | 456 | 1245 | 625 | 175 | 342 |
| 186 + TiO₂ | ERS 1685 | 509 | 759 | 2251 | 991 | 206 | 700 |
| 187 + TiO₂ | ERS 1618 | 346 | 632 | 1313 | 937 | 250 | 560 |

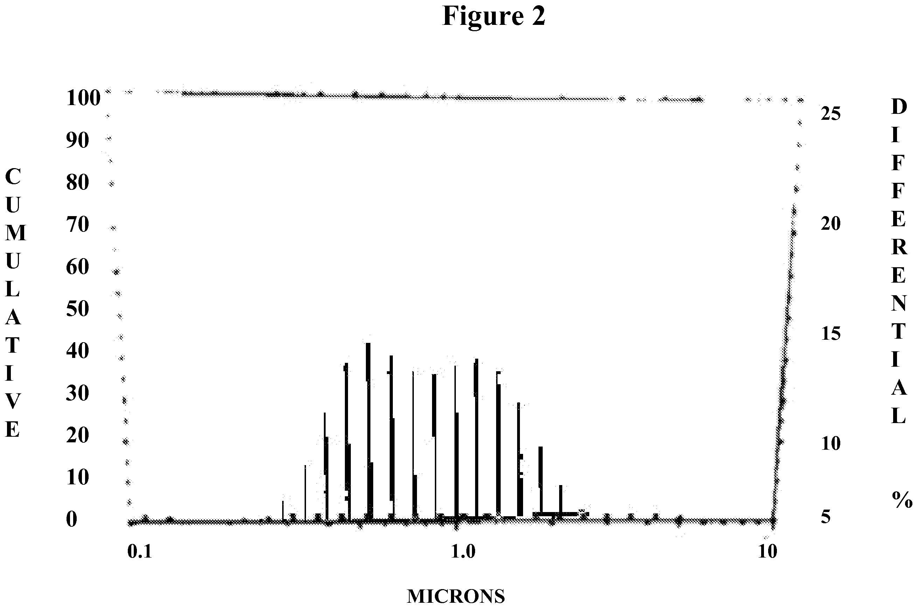

The particle size distributions of the TiO₂ and composites are shown below in Figures 2 to 6. The X-axis is a log scale centered at 1 µm (1000 nm), the left Y axis is the cumulative Mv line while the right Y axis indicates a scale for the histogram.

The particle size of the R-741 (TiO₂) in shown in Figure 2. It appears bimodal. The right mode compares favorably with the literature data of 550 nm obtained from the DuPont literature. The dispersion was not perfect, as there appears to be a significant volume of doublets at 1100 nm.

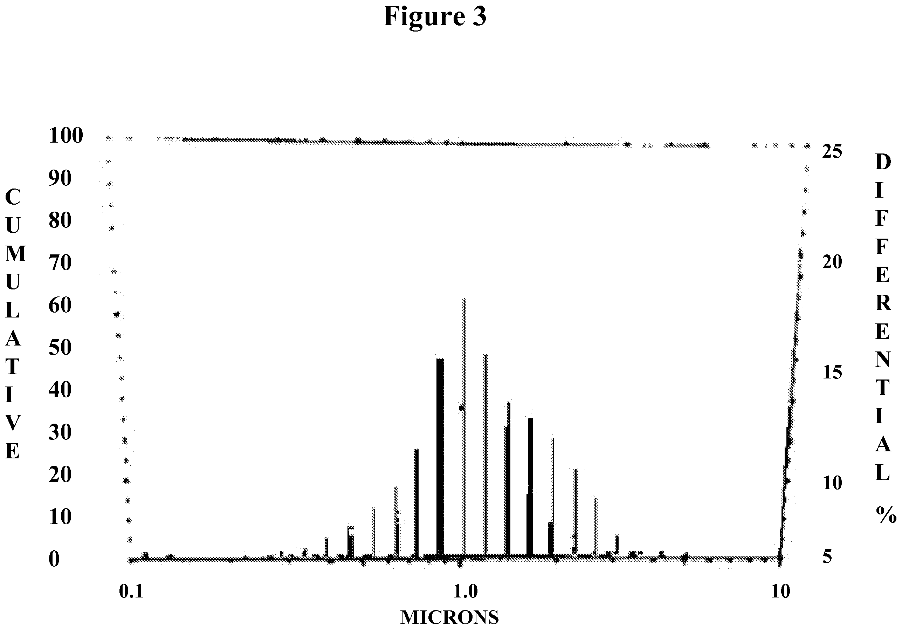

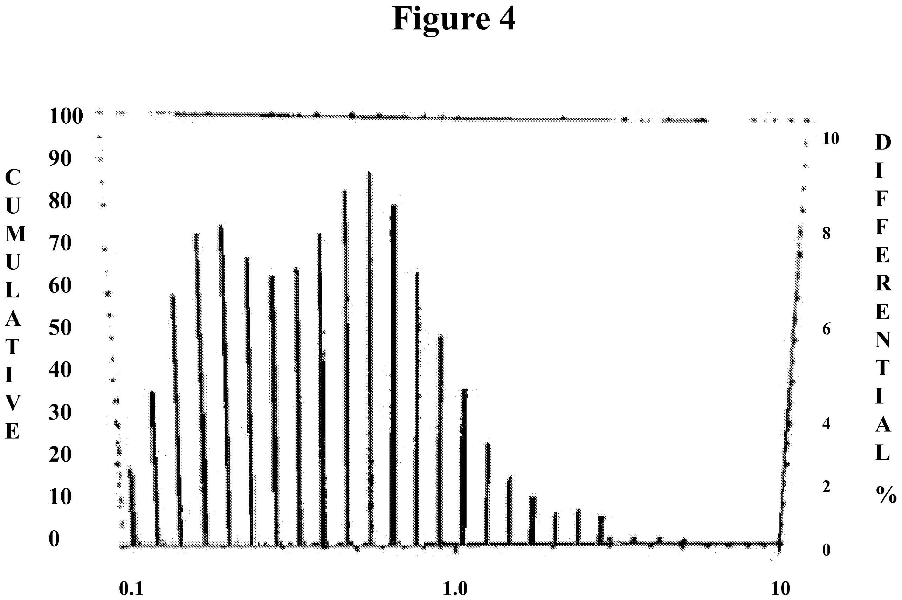

The composite particles size distributions (TiO₂ and latex) are also shown (Figures 3 to 6). Figure 3 demonstrates that the phosphate-modified latex has effectively adsorbed to the surface to the TiO₂ since there is no peak associated with the particle size of the latex (202 nm). Figure 4 demonstrates that the sulfate-modified latex has not adsorbed to the surface to the TiO₂ since there is a large peak associated with the particle size of the latex (196nm).

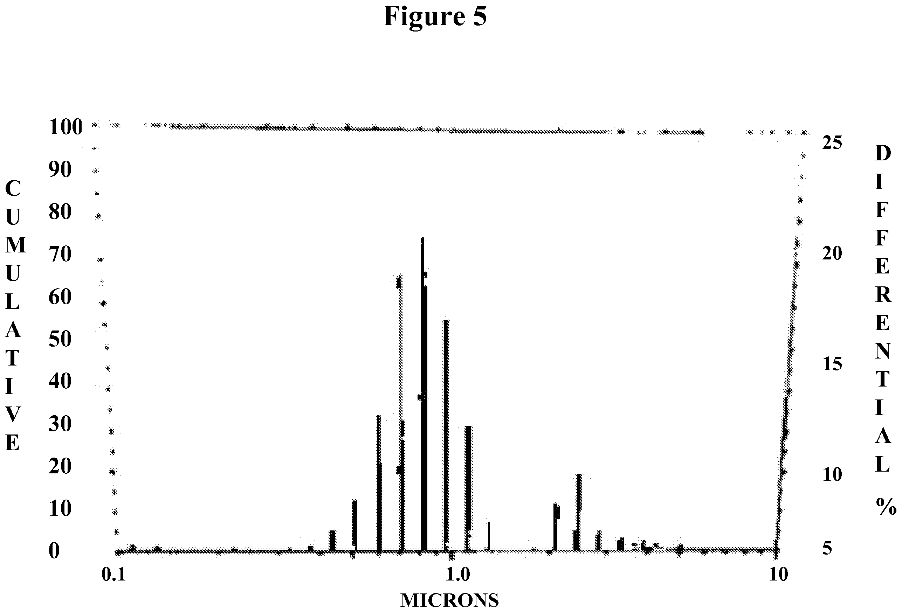

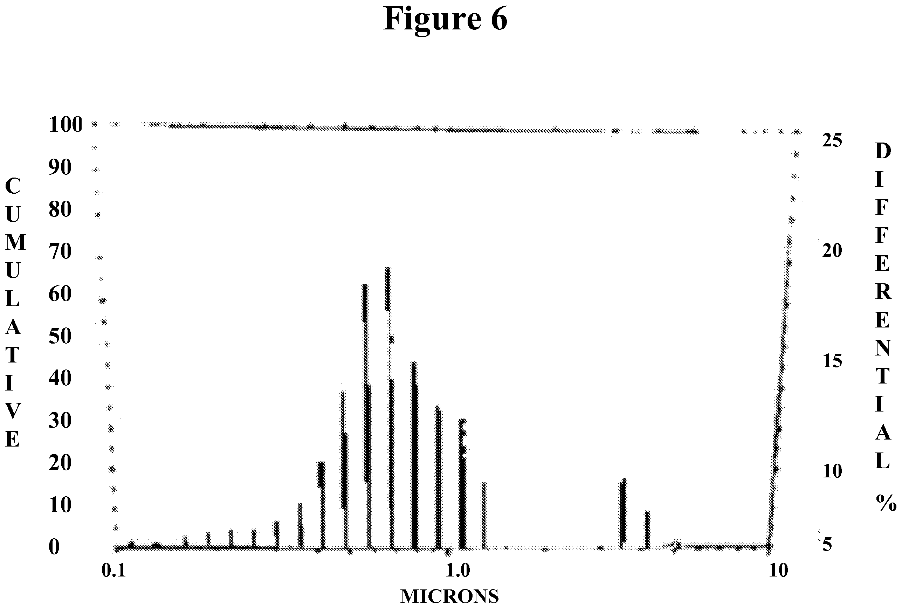

The particle size of the composites formed with the smaller particle sized latexes is shown in Figures 5 and 6.

In this case, there is less differentiation. While the phosphate latex does not appear in the distribution, the sulfate particle size is not significantly present either. The phosphate composite has a more narrow distribution (aside from some gross coagulation), than the sulfate composite. It is hypothesized that the small particle sized latexes may not be stable in any case in the presence of the TiO₂ due to a larger surface area that the surfactant must cover, and some coagulation ensued.

Based on particle size measurements, the data indicates that composite particles were formed, at least when the larger particle sized latexes were employed.

### Example 8

### OPACITY TESTING

The 184 and 185 TiO₂ + latex blends were drawn down into films cast on BYK PA-2811 charts (3 mil - wet applied). The opacity was measured on 1 day dried latex + TiO₂ blend paint films.

Opacity was measured as follows:
Opacity = LB/LW x 100
where L = Lightness as measured by the L,a,b system with an HP-200 colorimeter,
LW is the lightness measured over the white portion of the chart and
LB is the lightness measured over the black portion of the chart.

Higher values indicate better hiding. Three measurements were taken for LB and LW on each chart. The average of these values was used to obtain the Opacity. Table 6 below indicates that the opacity obtained with the polymerizable phosphate surfactant (ERS 1685) was superior to the polymerizable sulfate surfactant (ERS 1618).

**Table 6**

| | | |
|---|---|---|
| Blend | 184 + TiO₂ | 185 + TiO₂ |
| Surfactant | ERS 1685 | ERS 1618 |
| LB | 96.31 | 95.14 |
| LB | 96.24 | 94.04 |
| LB | 96.19 | 95.26 |
| Average LB | 96.25 | 94.81 |
| LW | 97.73 | 97.53 |
| LW | 96.67 | 96.16 |
| LW | 97.26 | 97.63 |
| Average LW | 97.22 | 97.11 |
| Opacity | 9 | 97.64 |

## Claims

1. A method for improving the opacity or hiding power of an aqueous latex coating which method comprises adding a TiO₂ dispersion to a latex particle dispersion in which the latex particles are manufactured in the presence of a phosphate-containing ethylenically unsaturated reactive surfactant, where the phosphate-containing ethylenically unsaturated reactive surfactant has the following structures:
R₁-O-(CH₂CHR₂O)ₓ(CH₂CHR₃O)_{y}-PO₃H₂
or
[R₁-O-(CH₂CHR₂O)ₓ(CH₂CHR₃O)_{y}-]₂-PO₂H
in which x = 1 - 10 and y = 4 - 200;
R₁ = phenyl, monostyrenated phenyl, distyrenated phenyl or tristyrenated phenyl, C₈-C₁₈alkyl substituted phenyl, arylalkyl;
R₂ = vinyl, allyl, allyl glycidyl, -CH=CH₂, -CH₂CH=CH₂, -CH₂OCH₂CH=CH₂, -CH₂OC(=O)CR₄=CH₂;
R₃ = H, -CH₃, -CH₂CH₃; and
R₄ = H, -CH₃.

2. A method for forming a TiO₂-latex composite particle dispersion comprising combining an aqueous TiO₂ dispersion with a latex manufactured with a phosphate-containing ethylenically unsaturated reactive surfactant, where the phosphate-containing ethylenically unsaturated reactive surfactant has the following structures:
R₁-O- (CH₂CHR₂O)ₓ(CH₂CHR₃O)_{y}-PO₃H₂
or
[R₁-O- (CH₂CHR₂O)ₓ(CH₂CHR₃O)_{y}-]₂-PO₂H
in which x = 1 - 10 and y = 4 - 200;
R₁ = phenyl, monostyrenated phenyl, distyrenated phenyl or tristyrenated phenyl, C₈-C₁₈alkyl substituted phenyl, arylalkyl;
R₂ = vinyl, allyl, allyl glycidyl, -CH=CH₂, -CH₂CH=CH₂, -CH₂OCH₂CH=CH₂, -CH₂OC(=O)CR₄=CH₂;
R₃ = H, -CH₃, -CH₂CH₃; and
R₄ = H, -CH₃.

3. An aqueous pigment dispersion comprising:
(a) water,
(b) at least one latex resin prepared with a phosphate-containing ethylenically unsaturated reactive surfactant; and
(c) titanium dioxide particles,
where the phosphate-containing
ethylenically unsaturated reactive surfactant has the following structures:
R₁-O- (CH₂CHR₂O)ₓ(CH₂CHR₃O)_{y}-PO₃H₂
or
[R₁-O- (CH₂CHR₂O)ₓ(CH₂CHR₃O)_{y}-]₂-PO₂H
in which x = 1 - 10 and y = 4 - 200;
R₁ = phenyl, monostyrenated phenyl, distyrenated phenyl or tristyrenated phenyl, C₈-C₁₈alkyl substituted phenyl, arylalkyl;
R₂ = vinyl, allyl, allyl glycidyl, -CH=CH₂, -CH₂CH=CH₂, -CH₂OCH₂CH=CH₂, -CH₂OC(=O)CR₄=CH₂;
R₃ = H, -CH₃, -CH₂CH₃; and
R₄ = H, -CH₃.

4. A process for preparing an aqueous dispersion of composite particles, the composite particles each comprising a plurality of polymeric latex particles adsorbed onto a titanium dioxide particle, the process comprising:
(a) suspending polymeric latex particles in an aqueous medium, the polymeric latex particles having been polymerized in the presence of a phosphate containing ethylenically unsturated reactive surfactant;
(b) suspending titanium dioxide particles in the aqueous medium; and
(c) mixing the aqueous medium containing the titanium dioxide particles and the polymeric latex particles, the polymeric latex particles adsorbing onto the titanium dioxide particles in a controlled manner to provide the composite particles,
wherein said phosphate containing ethylenically unsaturated reactive surfactant has the following structures:
R₁-O- (CH₂CHR₂O)ₓ(CH₂CHR₃O)_{y}-PO₃H₂
or
[R₁-O- (CH₂CHR₂O)ₓ(CH₂CHR₃O)_{y}-]₂-PO₂H
in which x = 1 - 10 and y = 4 - 200;
R₁ = phenyl, monostyrenated phenyl, distyrenated phenyl or tristyrenated phenyl, C₈-C₁₈alkyl substituted phenyl, arylalkyl;
R₂ = vinyl, allyl, allyl glycidyl, -CH=CH₂, -CH₂CH=CH₂, -CH₂OCH₂CH=CH₂, -CH₂OC(=O)CR₄=CH₂;
R₃ = H, -CH₃, -CH₂CH₃; and
R₄ = H, -CH₃.

5. Paints or other coatings containing the TiO₂ composite particle dispersion made by the process of Claim 2.

6. A coating for hard surfaces comprising the application of the dispersions of claim 3 to a hard surface and allowing the water to dry.

7. Hard surfaces coated with the dispersions of claim 3.

## Patentansprüche

1. Verfahren zur Verbesserung der Opazität oder der Deckkraft einer wässrigen Latexbeschichtung, wobei das Verfahren das Hinzufügen einer TiO₂-Dispersion zu einer Latexpartikeldispersion, in der die Latexpartikel in Gegenwart eines phosphat-enthaltenden, ethylenisch ungesättigten, reaktiven Tensids hergestellt sind, umfasst, wobei das phosphat-enthaltende, ethylenisch ungesättigte, reaktive Tensid die folgenden Strukturen hat:
R₁-O-(CH₂CHR₂O)ₓ(CH₂CHR₃O)_{y}-PO₃H₂
oder
[R₁-O-(CH₂CHR₂O)ₓ(CH₂CHR₃O)y-]₂-PO₂H
in denen x = 1-10 und y = 4-200 ist;
R₁ = Phenyl, monostyrolisiertes Phenyl, distyrolisiertes Phenyl oder tristyrolisiertes Phenyl, C₈-C₁₈-alkylsubstituiertes Phenyl, Arylalkyl;
R₂ = Vinyl, Allyl, Allylglycidyl, -CH=CH₂, -CH₂CH=CH₂, -CH₂OCH₂CH=CH₂, -CH₂OC(=O)CR₄=CH₂;
R₃ = H, -CH₃, -CH₂CH₃ und
R₄ = H, -CH₃.

2. Verfahren zur Herstellung einer TiO₂-Latexkompositpartikeldispersion umfassend das Kombinieren einer wäßrigen TiO₂-Dispersion mit einem Latex, das mit einem phosphat-enthaltenden, ethylenisch ungesättigten, reaktiven Tensid hergestellt ist, wobei das phosphat-enthaltende, ethylenisch ungesättigte, reaktive Tensid die folgenden Strukturen hat:
R₁-O-(CH₂CHR₂O)ₓ(CH₂CHR₃O)_{y}-PO₃H₂
oder
[R₁-O-(CH₂CHR₂O)ₓ(CH₂CHR₃O)_{y}-]₂-PO₂H
in denen x = 1 -10 und y = 4-200 ist;
R₁ = Phenyl, monostyrolisiertes Phenyl, distyrolisiertes Phenyl oder tristyrolisiertes Phenyl, C₈-C₁₈-Alkylsubstituiertes Phenyl, Arylalkyl;
R₂ = Vinyl, Allyl, Allylglycidyl, -CH=CH₂, -CH₂CH=CH₂, -CH₂OCH₂CH=CH₂, -CH₂OC(=O)CR₄=CH₂;
R₃ = H, -CH₃, CH₂CH₃; und
R₄ = H, -CH₃.

3. Wässrige Pigmentdispersion umfassend:
(a) Wasser,
(b) mindestens einen Latexrest, der mit einem phosphat-enthaltenden, ethylenisch ungesättigten, reaktiven Tensid hergestellt ist und
(c) Titandioxidpartikel,
wobei das phosphat-enthaltende, ethylenisch ungesättigte, reaktive Tensid die folgenden Strukturen hat:
R₁-O-(CH₂CHR₂O)ₓ(CH₂CHR₃O)_{y}-PO₃H₂
oder
[R₁-O-(CH₂CHR₂O)ₓ(CH₂CHR₃O)_{y}-]₂-PO₂H
in denen x = 1-10 und y = 4-200 ist;
R₁ = Phenyl, monostyrolisiertes Phenyl, distyrolisiertes Phenyl oder tristyrolisiertes Phenyl, C₈-C₁₈-Alkylsubstituiertes Phenyl, Arylalkyl;
R₂ = Vinyl, Allyl, Allylglycidyl, -CH=CH₂, -CH₂CH=CH₂, -CH₂OCH₂CH=CH₂, -CH₂OC(=O)CR₄=CH₂;
R₃ = H, -CH₃, -CH₂CH₃ und
R₄ = H, -CH₃.

4. Verfahren zur Herstellung einer wässrigen Dispersion von Kompositpartikeln, wobei die Kompositpartikel jeweils eine Vielzahl von polymerischen Latexpartikeln, die auf einem Titandioxidpartikel adsorbiert sind, umfassen, wobei das Verfahren umfasst:
(a) Suspendieren von polymerischen Latexpartikeln in einem wässrigen Medium, wobei die polymerischen Latexpartikel in Gegenwart eines phosphat-enthaltenden, ethylenisch ungesättigten, reaktiven Tensids polymerisiert worden sind;
(b) Suspendieren von Titandioxidpartikeln in dem wässrigen Medium, und
(c) Mischen des Titandioxidpartikel-enthaltenden wässrigen Mediums mit den polymerischen Latexpartikeln; wobei die polymerischen Latexpartikel auf den Titandioxidpartikeln kontrolliert adsorbieren, um die Kompositpartikel bereitzustellen,
wobei das phosphat-enthaltende, ethylenisch ungesättigte, reaktive Tensid die folgenden Strukturen hat:
R₁-O-(CH₂CHR₂O)ₓ(CH₂CHR₃O)_{y}-PO₃H₂
oder
[R₁-O-(CH₂CHR₂O)ₓ(CH₂CHR₃O)y-]₂-PO₂H
in denen x = 1-10 und y = 4-200 ist;
R₁ = Phenyl, monostyrolisiertes Phenyl, distyrolisiertes Phenyl oder tristyrolisiertes Phenyl, C₈-C₁₈-alkylsubstituiertes Phenyl, Arylalkyl;
R₂ = Vinyl, Allyl, Allylglycidyl, -CH=CH₂, -CH₂CH=CH₂, -CH₂OCH₂CH=CH₂, -CH₂OC(=O)CR₄=CH₂;
R₃ = H, -CH₃, -CH₂CH₃ und
R₄ = H, -CH₃.

5. Farben oder andere Beschichtungen, die die nach dem Verfahren von Anspruch 2 hergestellte TiO₂-Kompositpartikeldispersion enthalten.

6. Beschichtung für harte Oberflächen, umfassend die Anwendung der Dispersionen nach Anspruch 3 auf einer harten Oberfläche und Trocknenlassen des Wassers.

7. Harte Oberflächen, die mit den Dispersionen nach Anspruch 3 beschichtet sind.

## Revendications

1. Procédé permettant d'améliorer l'opacité ou le pouvoir de masquage d'un revêtement de latex aqueux, procédé consistant à ajouter une dispersion de TiO₂ à une dispersion de particules de latex dans lequel les particules de latex sont fabriquées en présence d'un tensioactif réactif éthyléniquement insaturé contenant du phosphate, où le tensioactif réactif éthyléniquement insaturé contenant du phosphate présente les structures suivantes:
R₁-O-(CH₂CHR₂O)ₓ(CH₂CHR₃O)_{y}-PO₃H₂,
ou
[R₁-O-(CH₂CHR₂O)ₓ(CH₂CHR₃O)_{y}-]₂-PO₂H
où x = 1 à 10 et y = 4 à 200;
R₁ = phényle, phényle monostyréné, phényle distyréné ou phényle tristyréné, phényle substitué par alkyle C₈-C₁₈, arylalkyle;
R₂ = vinyle, allyle, allylglycidyle, -CH=CH₂, -CH₂CH=CH₂, -CH₂OCH₂CH=CH₂,-CH₂OC(=O)CR₄=CH₂;
R₃ = H, -CH₃, -CH₂CH₃; et
R₄ = H, -CH₃.

2. Procédé de formation d'une dispersion de particules composites de latex TiO₂ comprenant le fait de combiner une dispersion aqueuse de TiO₂ avec un latex fabriqué avec un tensioactif réactif éthyléniquement insaturé contenant du phosphate, dans lequel le tensioactif réactif éthyléniquement insaturé contenant du phosphate présente les structures suivantes:
R₁-O-(CH₂CHR₂O)ₓ(CH₂CHR₃O)_{y}-PO₃H₂,
ou
[R₁-O-(CH₂CHR₂O)ₓ(CH₂CHR₃O)_{y}-]₂-PO₂H
où x = 1 à 10 et y = 4 à 200;
R₁ = phényle, phényle monostyréné, phényle distyréné ou phényle tristyréné, phényle substitué par alkyle C₈-C₁₈, arylalkyle;
R₂ = vinyle, allyle, allylglycidyle, -CH=CH₂, -CH₂CH=CH₂, -CH₂OCH₂CH=CH₂,-CH₂OC(=O)CR₄=CH₂;
R₃ = H, -CH₃, -CH₂CH₃; et
R₄ = H, -CH₃.

3. Dispersion aqueuse de pigment comprenant:
(a) de l'eau,
(b) au moins une résine de latex préparée avec un tensioactif réactif éthyléniquement insaturé contenant du phosphate; et
(c) des particules de dioxyde de titane,
dans lequel le tensioactif réactif éthyléniquement insaturé contenant du phosphate présente les structures suivantes:
R₁-O-(CH₂CHR₂O)ₓ(CH₂CHR₃O)_{y}-PO₃H₂,
ou
[R₁-O-(CH₂CHR₂O)ₓ(CH₂CHR₃O)y-]₂-PO₂H
où x = 1 à 10 et y = 4 à 200;
R₁ = phényle, phényle monostyréné, phényle distyréné ou phényle tristyréné, phényle substitué par alkyle C₈-C₁₈, arylalkyle;
R₂ = vinyle, allyle, allylglycidyle, -CH=CH₂, -CH₂CH=CH₂, -CH₂OCH₂CH=CH₂,-CH₂OC(=O)CR₄=CH₂;
R₃ = H, -CH₃, -CH₂CH₃; et
R₄ = H, -CH₃.

4. Procédé de préparation d'une dispersion aqueuse de particules composites, les particules composites comprenant, chacune, une pluralité de particules polymères de latex adsorbées sur une particule de dioxyde de titane, le procédé comprenant le fait de:
(a) mettre en suspension les particules polymères de latex dans un milieu aqueux, les particules polymères de latex ayant été polymérisées en présence d'un tensioactif éthyléniquement réactif contenant du phosphate;
(b) mettre en suspension les particules de dioxyde de titane dans le milieu aqueux; et
(c) mélanger le milieu aqueux contenant les particules de dioxyde de titane et les particules polymères de latex, les particules polymères de latex étant adsorbées sur les particules de dioxyde de titane de manière contrôlée pour fournir les particules composites,
dans lequel ledit tensioactif réactif éthyléniquement insaturé contenant du phosphate présente les structures suivantes:
R₁-O-(CH₂CHR₂O)ₓ(CH₂CHR₃O)_{y}-PO₃H₂,
ou
[R₁-O-(CH₂CHR₂O)ₓ(CH₂CHR₃O)_{y}-]₂-PO₂H
où x = 1 à 10 et y = 4 à 200;
R₁ = phényle, phényle monostyréné, phényle distyréné ou phényle tristyréné, phényle substitué par alkyle C₈-C₁₈, arylalkyle;
R₂ = vinyle, allyle, allylglycidyle, -CH=CH₂, -CH₂CH=CH₂, -CH₂OCH₂CH=CH₂,-CH₂OC(=O)CR₄=CH₂;
R₃ = H, -CH₃, -CH₂CH₃; et
R₄ = H, -CH₃.

5. Peintures ou autres revêtements contenant la dispersion de particules composites de TiO₂ préparée par le procédé selon la revendication 2.

6. Revêtement pour surfaces dures comprenant le fait d'appliquer les dispersions selon la revendication 3 sur une surface dure et de laisser sécher l'eau.

7. Surfaces dures revêtues des dispersions selon la revendication 3.
